# EUROPÄISCHE PATENTANMELDUNG

(11) **EP 0 924 867 A2**
(43) Veröffentlichungstag der Anmeldung: **23.06.1999**
(21) Anmeldenummer: 98121100.6
(22) Anmeldetag: 06.11.1998
(51) Int. Cl.: H04B 1/38, H04M 1/72

(54) **Kartenleseeinrichtung für Mobilfunkgeräte**

(30) Priorität: 22.12.1997 DE 19757371
(71) Anmelder: SIEMENS AKTIENGESELLSCHAFT, 80333 München (DE)
(72) Erfinder: Stögmüller, Rupert, 81739 München (DE)

(57) **Zusammenfassung**

Die vorliegende Erfindung betrifft eine Kartenleseeinrichtung für Mobilfunkgeräte, bei der die Karte vom Akkuaufnahmefach aus durch einen Aufnahmeschlitz in Längsrichtung in eine Aufnahmevorrichtung eingeschoben wird und nach Gebrauch mittels eines durch eine Gehäuseöffnung von außen zugängigen Schiebers, welcher einen Mitnehmer für die Karte aufweist, durch den Aufnahmeschlitz ausgestoßen wird.

Aus Gründen der Platzersparnis befindet sich der Schieber unterhalb der Aufnahmevorrichtung, wobei der Mitnehmer an dem Ende des Schiebers angeordnet ist, welches, in Ausstoßrichtung der Karte gesehen, hinter der Karte liegt.
Die, in Ausstoßrichtung der Karte gesehen, vordere Kante des Schiebers dient als Rastverriegelung für den Akku und ragt durch einen weiteren Schlitz in das Akkuaufnahmefach hinein,
   wobei in einer ersten eingeschobenen Position des Schiebers die vordere Kante um eine vorgegebene Länge in das Akkuaufnahmefach hineinragt, und
   wobei der Schieber gegen eine Federrückstellkraft in eine zweite eingeschobene Position geschoben werden kann, in welcher sich die vordere Kante innerhalb des zweiten Schlitzes befindet.

## Beschreibung

Die vorliegende Erfindung betrifft eine Kartenleseeinrichtung für Mobilfunkgeräte, bei der die Karte vom Akkuaufnabmefach aus durch einen Aufnahmeschlitz in Längsrichtung in eine Aufnahmevorrichtung eingeschoben wird und nach Gebrauch mittels eines durch eine Gehäuseöffnung von außen zugängigen Schiebers, welcher einen Mitnehmer für die Karte aufweist, durch den Aufnahmeschlitz ausgestoßen wird.

Derartige Kartenleser sind allgemein bekannt. Dabei können die Schieber seitlich angeordnet sein oder sie sind auf der Rückseite angeordnet, wobei sich der Schieber in Längsrichtung des Mobilfunkgeräts, in Ausstoßrichtung der Karte gesehen, hinter der Karte befindet. Da sich aber in allen Fällen der Schieber in unmittelbarer Nähe des Akkuaufnahmefachs befindet, wo zusätzlich eine Verriegelungsvorrichtung für den Akku unterzubringen ist, kommt es zu erheblichen Platzproblemen, was einer weiteren Verkleinerung des Mobilfunkgerätes im Wege steht.

Aufgabe der vorliegenden Erfindung ist es daher, einen Kartenleser der eingangs genannten Art anzugeben, welcher eine Akkuverriegelung ohne großen Platzbedarf ermöglicht.

Diese Aufgabe wird erfindungsgemäß für einen Kartenleser der oben genannten Art dadurch gelöst daß sich der Schieber unterhalb der Aufnahmevorrichtung für die Karte befindet, wobei der Mitnehmer für die Karte an dem Ende des Schiebers angeordnet ist, welches, in Ausstoßrichtung der Karte gesehen, hinter der Karte liegt,
daß die, in Ausstoßrichtung der Karte gesehen, vordere Kante des Schiebers als Rastverriegelung für den Akku dient und durch einen weiteren Schlitz in das Akkuaufnahmefach hineinragt,
   wobei in einer ersten eingeschobenen Position des Schiebers die vordere Kante um eine vorgegebene Länge in das Akkuaufnahmefach hineinragt, und
   wobei der Schieber gegen eine Federrückstellkraft in eine zweite eingeschobene Position geschoben werden kann, in welcher sich die vordere Kante innerhalb des zweiten Schlitzes befindet.

Bei der Kartenlesevorrichtung gemäß der vorliegenden Erfindung ist die Akkuverriegelung in die Kartenlesevorrichtung integriert, was zu einem geringen Platzbedarf für Kartenlesevorrichtung und Akkuverriegelung führt.

Weitere zweckmäßige Ausgestaltungen der erfindungsgemäßen Kartenlesevorrichtung ergeben sich aus den Unteransprüchen sowie aus der nachfolgenden Beschreibung eines Ausführungsbeispiels der Erfindung anhand einer Zeichnung.

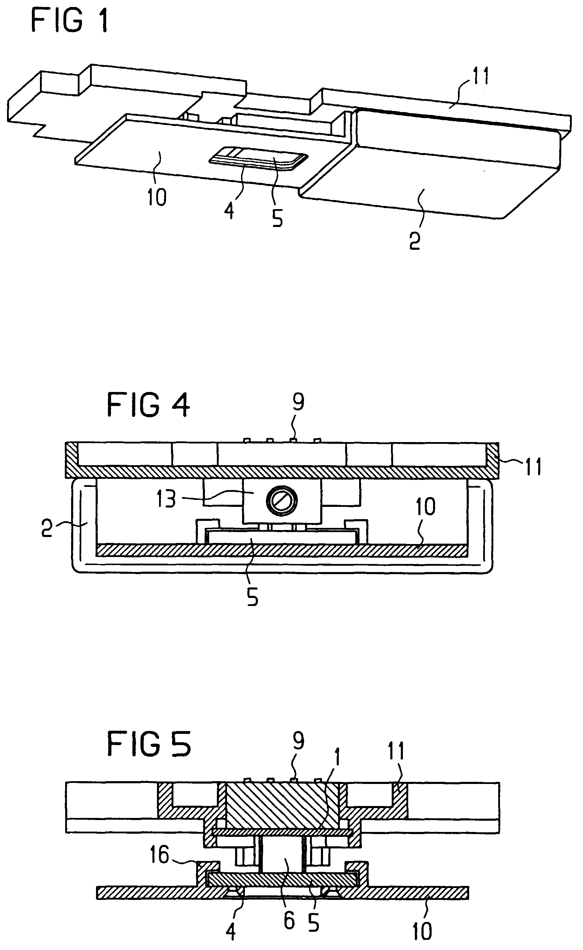

Es zeigen
FIG 1 eine perspektivische Ansicht eines Gehäuseabschnitts eines Mobilfunkgerätes, welcher eine erfindungsgemäße Kartenleseeinrichtung enthält, und eines Akkus,

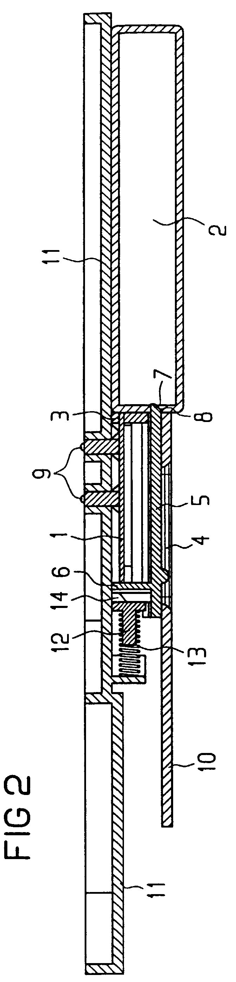

FIG 2 einen Längsschnitt durch den in FIG 1 dargestellten Gehäuseabschnitt,

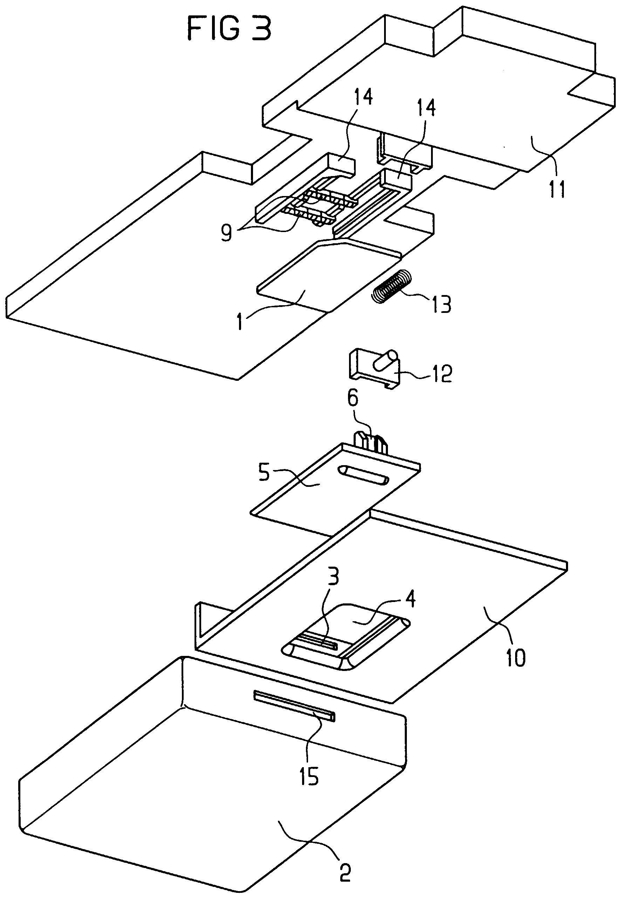

FIG 3 eine perspektivische Explosionsdarstellung des in FIG 1 dargestellten Gehäuseabschnitts,
FIG 4 einen Querschnitt durch den in FIG 1 dargestellten Gehäuseabschnitt entlang der in FIG 2 gezeigten Linie A-A, und
FIG 5 einen Querschnitt durch den in FIG 1 dargestellten Gehäuseabschnitt entlang der in FIG 2 gezeigten Linie B-B.

In der Zeichnung sind nur die zum Verständnis der Erfindung notwendigen Bauteile gezeigt, d. h., es ist sind nur der Gehäuseabschnitt des Mobilfunkgerätes, welcher die Kartenleseeinrichtung für die Karte 1 (im dargestellten Beispiel eine SIM-Karte) enthält, und der Akku 2 dargestellt.

Die Kartenleseeinrichtung weist in der Nähe des Bodens des Akkuaufnahmefachs einen Aufnahmeschlitz 3 , durch welchen die Karte 1 mit der Hand in die Kartenleseeinrichtung eingeschoben wird. In der Kartenleseeinrichtung wird sie mittels des Kontaktsatzes 9, welcher am Schirmgehäuse 11 befestigt ist, ausgelesen. Wenn die Karte 1 nicht mehr benötigt wird, wird sie mit Hilfe des Schiebers 5, welcher durch eine Gehäuseöffnung 4 im Gerätegehäuse 11 zugängig ist, ausgestoßen. Dabei wird die Karte 1 bei verschieben des Schiebers 5 in Ausstoßrichtung der Karte 1 von dem Mitnehmer 6 erfaßt und durch den Aufnahmeschlitz 3 ausgestoßen. Danach wird der Schieber 5 wieder zurückgeschoben und die alte Karte kann aus dem Akkuaufnahmefach entnommen werden. Anschließend kann eine neue Karte eingeschoben werden.

Bei der erfindungsgemäßen Kartenleseeinrichtung wird nun die, in Ausstoßrichtung der Karte 1 gesehen, vordere Kante des Schiebers, welche durch einen zweiten Schlitz 8 in das das Akkuaufnahmefach hineinragt, als Akkuverriegelung verwendet, welche zur Verriegelung des Akkus 2 in einen entsprechenden im Akku 2 vorgesehenen Hinterschnitt 15 einrastet.

In einer ersten eingeschobenen Position des Schiebers 5 ragt die vordere Kante des Schiebers um eine vorgegebene Länge in das Akkuaufnahmefach hinein. Diese Position wird z. B. nach dem Einschieben einer Karte 1 oder nach einem normalen Einschieben des Schiebers 5 durch die Gehäuseöffnung 4 bis zu einem ersten Anschlagpunkt erreicht.

In dieser ersten Position stößt der Mitnehmer 6 des Schiebers 5 gegen ein Rückstellelement 12. In seinem Ruhezustand liegt das Rückstellelement 12 an seitlich vom Mitnehmer 6 angeordneten Anschlägen 14 an. Gegen diese Anschläge 14 wird das Rückstellelement 12 mittels einer Rückstellfeder 13 gedrückt.

Beim Einschieben eines Akkus 2 in das Akkuaufnahmefach wird nun der Schieber 5 durch den Akku 2 mit seiner vorderen Kante gegen die Federkraft der Rückstellfeder 13 weiter in eine zweite Position eingeschoben, in welcher die vordere Kante nicht mehr in das Akkuaufnahmefach hineinragt. Diese zweite Position kann auch durch Betätigen des Schiebers 5 per Hand durch die Gehäuseöffnung 4 erreicht werden.

Wenn der Akku 2 seinen endgültige Stellung eingenommen hat, d. h., wenn die vordere als Akkuverriegelung dienende Kante des Schiebers 5 dem für die Verriegelung im Akku 2 vorgesehnen Hinterschnitt 15 gegenüberliegt, wird die vordere Kante des Schiebers 5 durch die Rückstellhraft der Rückstellfeder 13 in den Hinterschnitt 15 hineingedrückt und der Akku 2 ist verriegelt.

## Patentansprüche

1. Kartenleseeinrichtung für Mobilfunkgeräte, bei der die Karte vom Akkuaufnahmefach aus durch einen Aufnahmeschlitz in Längsrichtung in eine Aufnahmevorrichtung eingeschoben wird und nach Gebrauch mittels eines durch eine Gehäuseöffnung von außen zugängigen Schiebers, welcher einen Mitnehmer für die Karte aufweist, durch den Aufnahmeschlitz ausgestoßen wird,
dadurch gekennzeichnet,
daß sich der Schieber (5) unterhalb der Aufnahmevorrichtung für die Karte (1) befindet, wobei der Mitnehmer (6) für die Karte (1) an dem Ende des Schiebers (5) angeordnet ist, welches, in Ausstoßrichtung der Karte (1) gesehen, hinter der Karte (1) liegt,
daß die, in Ausstoßrichtung der Karte (1) gesehen, vordere Kante des Schiebers (5) als Rastverriegelung für den Akku (2) dient und durch einen weiteren Schlitz (8) in das Akkuaufnahmefach hineinragt,
wobei in einer ersten eingeschobenen Position des Schiebers (5) die vordere Kante um eine vorgegebene Länge in das Akkuaufnahmefach hineinragt, und
wobei der Schieber (5) gegen eine Federrückstellkraft in eine zweite eingeschobene Position geschoben werden kann, in welcher sich die vordere Kante innerhalb des zweiten Schlitzes (8) befindet.

2. Kartenleseeinrichtung nach Anspruch 1,
dadurch gekennzeichnet,
daß beim Verschieben des Schiebers (5) in seine zweite Position der Mitnehmer (6) zwischen zwei Anschlägen (14) hindurch gegen ein Rückstellelement (12) gedrückt wird, wobei das Rückstellelement (12) mittels einer Rückstellfeder (13) gegen die Anschläge gedrückt wird.

3. Kartenleseeinrichtung nach Anspruch 1 oder 2,
dadurch gekennzeichnet,
daß die vordere Kante des Schiebers (5) abgeschrägt ist.

4. Kartenleseeinrichtung nach einem der vorhergehenden Ansprüche,
dadurch gekennzeichnet,
daß der Schieber (5) in einer mit dem Gerätegehäuse (!0) fest verbundenen Führung (16) geführt ist.
